# EUROPÄISCHE PATENTSCHRIFT

(11) **EP 2 572 445 B1**
(45) Veröffentlichungstag und Bekanntmachung des Hinweises auf die Patenterteilung: **04.07.2018**
(21) Anmeldenummer: 11738663.1
(22) Anmeldetag: 08.07.2011
(51) Int. Cl.: H02M 7/49, H02M 7/493, H02M 7/537, H02M 7/5387

(54) **IN LEISTUNG UND FREQUENZ SKALIERBARER UMRICHTER**
INVERTER SCALABLE IN POWER AND FREQUENCY
CONVERTISSEUR À PUISSANCE ET FRÉQUENCE MODULABLES

(30) Priorität: 09.08.2010 DE 102010033755
(43) Veröffentlichungstag der Anmeldung: 27.03.2013
(73) Patentinhaber: Siemens Aktiengesellschaft, 80333 München (DE)
(72) Erfinder: NOWAK, Stefan, 91093 Hessdorf (DE)
(86) Internationale Anmeldenummer: PCT/EP2011/061647
(87) Internationale Veröffentlichungsnummer: WO 2012/019839

(56) Entgegenhaltungen:
- WO-A1-02/27908
- JP-A- 55 074 379
- US-A- 3 697 717
- US-A- 6 031 738

## Beschreibung

Die Erfindung betrifft einen Umrichter zur Bereitstellung eines in Leistung und Frequenz skalierbaren Umrichterausgangssignals.

Die Bereitstellung von Strom-oder Spannungssignalen mit definierter Frequenz bzw. Leistung spielt bei vielen technischen Anwendungen eine Rolle. Ein Bespiel für eine Schaltung wo typischerweise ein Umrichter zum Einsatz kommt, sind Induktionsheizungen und Induktionsöfen. Umrichter bzw. Wechselrichter für Induktionserwärmungsanlagen sind handelsüblich und werden in verschiedenen Variationen angeboten. Beispielsweise bietet die Firma GH-Induktion Deutschland Umrichter auf IGBT-und MOSFET-Basis an. Es werden auch Frequenzumrichter vertrieben, die in einem gewissen Rahmen skalierbar sind. (z.B. von der Firma EMA Indutec GmbH vertriebene Geräte). Diese Geräte sind bei hohen Spannungen immer aufwändiger herzustellen. Kosten, Schaltverluste und Volumen sind Aspekte, wo derzeit Anstrengungen zur Verbesserung gemacht werden. Technische Verbesserungen für Umrichter sind beispielsweise in den Druckschriften WO 02/27908 A1, DE 39 10 118 A1, DE 103 61 458 A1, DE 10 20040 21 217 A1 und DE 10 2006 032 640 A1 beschrieben.

Es besteht ein Bedarf für einen in der Frequenz skalierbaren Umrichter, der aufwandsarm ist und für hohe Ströme bzw. Spannungen zum Einsatz kommen kann.

Die Aufgabe wird gelöst durch den im Hauptanspruch definierten und durch die Unteransprüche weiter gebildeten Umrichter.

Der erfindungsgemäße Umrichter liefert ein in der Frequenz skalierbares Ausgangssignal (z.B. Wechselstrom oder Wechselspannung). Für die Erzeugung dieses Ausgangssignal werden Signale zu einem Signal mit einem für das Umrichterausgangssignal vorgegebenen Frequenzwert überlagert. Dabei handelt es sich z.B. um identische Signale (z.B. Pulssequenzen oder oszillierende Signale). Diese Signale werden mit Hilfe einer zentralen Steuerung zeitlich so versetzt (z.B. mittels Phasenversatz), dass sich bei der Überlagerung ein Ausgangssignal mit der gewünschten bzw. eingestellten Frequenz ergibt. Die Steuerung kann dafür eingerichtet sein, die Generierung der überlagerten Signale mit einer einstellbaren Frequenz zu veranlassen. Das Signal mit dem für das Umrichterausgangssignal vorgegebenen Frequenzwert stellt entweder schon das Umrichterausgangssignal dar oder wird für die Generierung des Umrichterausgangssignals verwendet (Generierung des Ausgangssignals z.B. mittels geeigneter Transformationen des mittels Überlagerung erzeugter Signale).

Der erfindungsgemäße Umrichter erlaubt somit eine aufwandsarme Erzeugung auch von Ausgangssignalen mit hoher Frequenz.

Gemäß einer Weiterbildung des Erfindungsgegenstands umfasst der Umrichter eine Mehrzahl von Umrichtereinheiten. Der Umrichter ist dann für eine Verknüpfung (Z.B. Überlagerung oder Kombination) von Signalen der Umrichtereinheiten zur Generierung des Umrichterausgangssignal ausgestaltet. Vorzugsweise sind die Umrichtereinheiten jeweils zum Schutz der Elektronik mit einem Transformator (Trenn-Transformator) gebildet, so dass eine galvanische Trennung bzw. Entkopplung realisiert wird, um so die Sicherheit gegen elektromagnetische Störungen zu verbessern.

Der Umrichter kann zudem eine zentrale Kühlung umfasst, mit Hilfe derer die einzelnen Umrichtereinheiten gekühlt werden.

Die Umrichtereinheiten können z.B. im Sinne einer Parallelschaltung oder Reihenschaltung bzw. Kaskadierung angeordnet sein.

Der erfindungsgemäße Umrichter ist aufwandsarm gebildet. Er ist zusammengesetzt aus einzelnen Umrichterelementen, die für niedrigere Frequenzen bzw. Leistungen konzipiert sind. Dieser Aufbau aus einzelnen Elementen mit niedrigeren Anforderungen ermöglicht die Bereitstellung eines Umrichters, der Aufwand und Belastungen von herkömmlichen Umrichtern mit entsprechend hohen Anforderungen vermeidet. Dieser Umrichter ermöglicht die Skalierung in einem weiten Frequenzbereich. Dies wird dadurch ersichtlich, dass die theoretisch niedrigste Frequenz durch die untere Frequenzgrenze eines Umrichterelements gegeben ist, dagegen die höchste Frequenz durch die maximale Frequenz eines Umrichterelements multipliziert mit der maximalen Anzahl von Ausgangssignalen der Umrichterelemente. Dabei sind die einzelnen Umrichtereinheiten vorzugsweise auch bezüglich der Frequenz skalierbar.

Im Zuge einer ersten Ausführungsform bzgl. der Anordnung der Umrichtereinheiten ist der Umrichter für eine Überlagerung von Ausgangssignalen der Umrichtereinheiten zu dem Umrichterausgangssignal ausgestaltet. Die Steuerung ist dann dafür eingerichtet, durch einen Zeitversatz dieser Ausgangssignale die Überlagerung der Ausgangssignale zu dem Umrichterausgangssignal mit vorgegebenem Frequenzwert zu veranlassen. Dieses Umrichterausgangssignal hat dann in der Regel eine höhere Frequenz als die Ausgangssignale der Umrichtereinheiten. Diese Ausführungsform kann einen (evtl. zusätzlichen) Trenn-Transformator für die Überlagerung von Ausgangssignalen der Umrichtereinheiten aufweisen. Es kann weiter eine Frequenz-Einstellung für die Ausgangssignale der Umrichtereinheiten vorgesehen sein.

Im Rahmen einer zweiten Ausführungsform bzgl. der Anordnung der Umrichtereinheiten ist der Umrichter gemäß einer Kaskadierung der Umrichtereinheiten aufgebaut. Die Steuerung ist dann dafür eingerichtet, durch einen Zeitversatz und anschließendes Überlagern von Signalen innerhalb wenigstens einer der Umrichtereinheiten ein Ausgangssignal dieser Umrichtereinheit mit dem vorgegebenen Frequenzwert zu erzeugen.

Gemäß einer Weiterbildung des Anmeldungsgegenstands ist die Steuerung dafür eingerichtet, durch Festlegung bzw. Aktivierung (z.B. einer für ein Ausgangssignal des Umrichters verwendeten Anzahl) von Umrichtereinheiten eine Steuerung der Ausgangsleistung bzw. der Ausgangsfrequenz des Umrichters zu bewirken. Bei der oben präsentierten ersten Ausführungsform bzgl. der Anordnung der Umrichtereinheiten wird durch die Anzahl von Umrichtereinheiten die Anzahl von überlagerten Signalen festgelegt (z.B. Hinzuschalten bzw. Abschalten von für die Generierung des Umrichterausgangssignals verwendete Umrichtereinheiten) ein Signal pro Umrichtereinheit). Die Ausgangsfrequenz ist bei gegebener Signalfrequenz von zu überlagernden Signalen direkt abhängig davon, wie viele Signale mit welchem Zeitversatz überlagert werden. D.h. durch die Anzahl der verwendeten Umrichtereinheit kann die Ausgangsfrequenz beeinflusst werden. Zusätzlich kann eine Steuerung der Signalfrequenzen der Umrichtereinheiten vorgesehen sein, so dass hier ein weiterer Steuerparameter gegeben ist.

Im Rahmen der zweiten Ausführungsform bzgl. der Anordnung der Umrichtereinheiten kann vorgesehen sein, Umrichtereinheiten zwischen zwei Zuständen (aktiviert bzw. desaktiviert) umzuschalten, wobei im ersten Zustand eine Signaltransformation bewirkt wird, im zweiten Zustand dagegen die Umrichtereinheit keinen Einfluss auf das Ausgangssignal hat.

Der Erfindungsgegenstand wird im Folgenden im Rahmen eines Ausführungsbeispiels näher dargestellt. Es zeigen
Fig. 1: einen erfindungsgemäßen Umrichter,
Fig. 2: eine erfindungsgemäße Signal- bzw. Pulsüberlagerung,
Fig. 3: eine Variante des erfindungsgemäßen Umrichters mit Einspeisung in nur eine Primärwicklung des Ausgangstransformators
Fig. 4: einen erfindungsgemäßen Umrichter mit in Reihe geschalteten Umrichterelementen

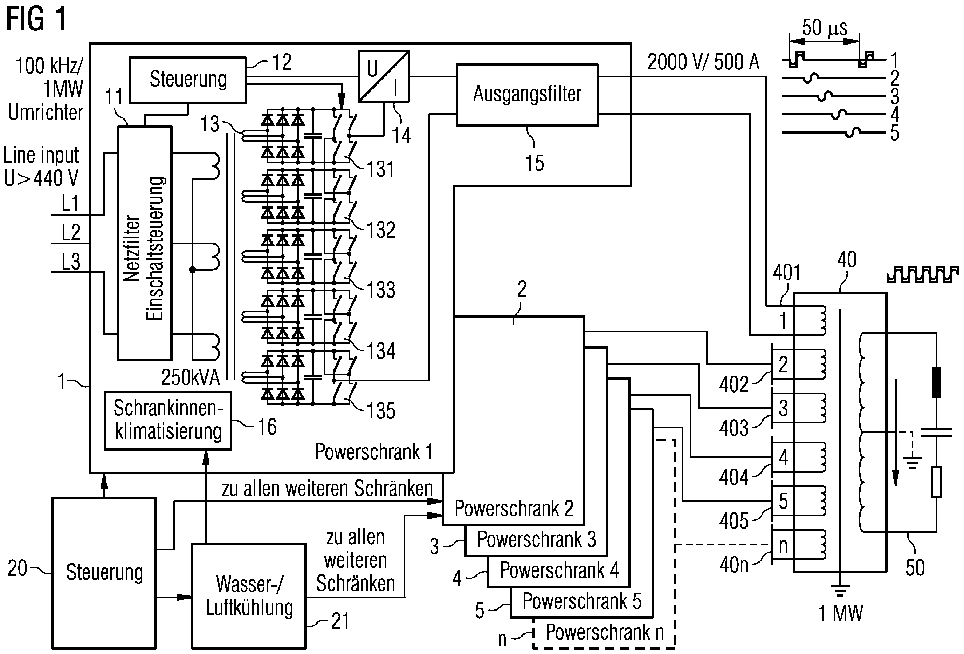

Fig. 1 zeigt einen erfindungsgemäßen Umrichter. Dieser ist gebildet mit Umrichterelementen bzw. Powerschränken 1 bis 5. Ein weiterer Powerschrank n ist gestrichelt eingezeichnet. Dieser soll andeuten, dass eine Erweiterung auf höhere Anzahlen von Powerschränken möglich ist. Insbesondere ist ein schon installiertes Gesamtsystem im Bedarfsfall relativ einfach erweiterbar bzw. hochskalierbar, indem noch zusätzliche Powerschränke eingebaut werden.

Anhand von Powerschrank 1 ist der Aufbau eines derartigen Elements schematisch dargestellt. Powerschrank 1 weist drei Eingangsleitungen L1, L2 und L3 auf. Hierbei handelt es sich um einen Drehstromeingang eines Drehstromnetzes. Die drei Eingangsleitungen liegen auf einer Spannung U von ca. 440 V oder darüber (Mittelspannung). Diese Eingangsleitungen führen zu einer Komponente 11, die einen Netzfilter und eine Einschaltsteuerung beinhaltet. Komponente 11 umfasst einen Gleichrichter und Schaltelemente (z.B. Kondensatoren) für ein kontinuierliches Hochfahren.

Die Komponente 11 ist verbunden mit einer Steuerung 12 für die im Powerschrank 1 vorgesehenen Schaltelemente, insbesondere eines Transformators 13. Mittels des Transformators 13, der auf 250 kVA dimensioniert ist, wird eine galvanische Trennung von der Netzspannung realisiert (Trenn-Transformator). Bei dem Transformator handelt es sich um einen 250 kVA 50/60 Hz Transformator, der sekundär 5 Drehstromsysteme bzw. Zylinder 131, 132, 133, 134 und 135 mit 5 × 3 Wicklungen aufweist.

Weiter weist der Powerschrank 1 einen Strom/Spannungswandler 14 und einen Ausgangsfilter 15 auf. Mittels des Ausgangsfilters 15 kann die Spannungsanstiegsgeschwindigkeit begrenzt werden, um das Ausgangskabel (LC-Kabel) zu schützen. Das Erfordernis eines derartigen Kabelschutzes ist abhängig von den auftretenden Belastungen und den Leistungseigenschaften des Kabels. Schließlich ist eine Schrankinnenklimatisierung 16 in dem Powerschrank 1 angeordnet.

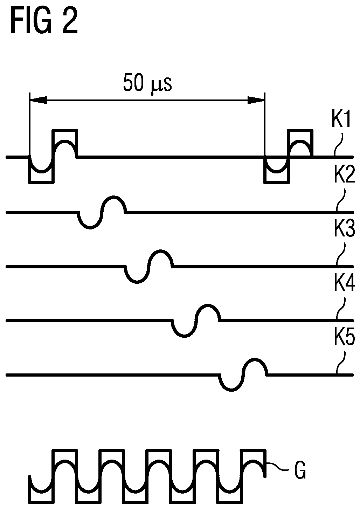

Es sind fünf entsprechende Powerschränke vorgesehen. Diese werden gesteuert durch eine zentrale Steuerung 20. Die Klimatisierungen der einzelnen Powerschränke (Element 16 für Powerschrank 1) werden mittels einer zentralen Wasserluftkühlung 21 versorgt. Die fünf Powerschränke werden nun zeitversetzt von der Steuerung 20 angesteuert, so dass die Ausgangssignale zeitlich hintereinander liegen. Dies ist anhand von Figur 2 illustriert. Die obigen Kurven K1 bis K5 entsprechen den Ausgangssignalen der Powerschränke 1 bis 5. Dabei handelt es sich um mittels LC-Schwingkreis erzeugte Sinusschwingungsimpulse. Die einzelnen Schwingungen sind jeweils um 10 µs zueinender versetzt und haben (wie in Kurve K1 angedeutet) eine Periode von 50 µs bzw. eine Frequenz von 20 kHz. Diese werden dann mittels eines weiteren Transformators zu einem Gesamtsignal G kombiniert, welches in der Figur 2 unten gezeigt ist und welches die fünffache Frequenz (100 kHz) der Ausgangssignale der einzelnen Powerschränke aufweist.

Konkret können folgende Leistungsdaten gegeben sein: Jedes Umrichterelement 1 bis 5 übernimmt einen 100 kHz-Schwinger bei eine Wiederholrate von 20 kHz. Die Ausgangsspannung eines Umrichterelements ist dann ca. 2 kV bei der Verwendung eines Trafos mit 250 kVA. Man hat also jeweils eine Leistungseinheit bzw. Umsetzereinheit für 200 kW und (maximal) 20 kHz. Ein Gesamtsystem umfasst beispielsweise 5 Leistungseinheiten für 1 MW mit einer Maximalfrequenz von 100 kHz. Die maximale Leistung und Frequenz kann dann skaliert werden durch mehr oder weniger Leistungseinheiten, z.B. in dem nur ein Teil der fünf Powerschränke für die Bildung des Gesamtausgangssignals verwendet wird. Durch die Transformatoren ist eine galvanische Trennung vom Netz realisiert, um hier Sicherheitsaspekten Genüge zu leisten. Die erforderliche Eingangsspannung von > 440 V ist einfach zu realisieren; die Ausgangsspannung einer Leistungseinheit bis zu 2kV.

Die Gesamteinheit besteht also aus fünf gleichen Leistungseinheiten mit 200 kW und 20 kHz Ausgangsstrom, die parallel auf ein Ausgangstrafo 40 mit 5 Primärwicklungen 401, 402, 403, 404 und 405 geschaltet werden (eine Primärwicklung 40n ist im Hinblick auf die Skalierbarkeit des Systems zusätzlich angedeutet). Dabei handelt es sich z.B. um einen Hochfrequenztransformator mit Ferritkern.

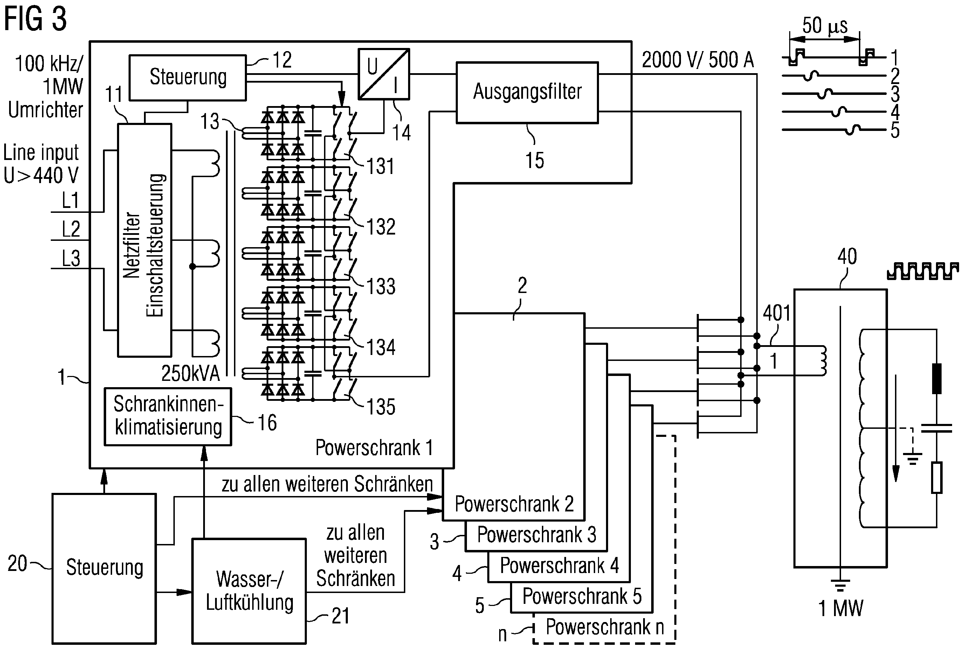

Die in Figur 1 gezeichneten 5-fachen bzw. n-fachen Primärwicklungen des Ausgangstransformators 40 sind nicht zwingend notwendig, hart parallel schalten an einer Wicklung ist ebenfalls möglich. Dies ist in Fig. 3 gezeigt, in welcher die Signale der Umrichterelemente 1 bis 5 in eine Primärwicklung 401 eingespeist wird.

Durch Hinzufügen oder Weglassen von Leistungseinheiten kann die Ausgangsfrequenz des Stroms in Stufen um bis zu 20 kHz erhöht oder verringert werden. Die mögliche Ausgangsleistung skaliert ebenfalls mit bis zu 200 kW. Jede Leistungseinheit erzeugt in der Ausgangsspannung bis zu 2 kW, das reduziert die nötigen Ströme und damit den Leitungsquerschnitt und Verdrahtungsaufwand. Es ist ein Ausgangsübertrager 40 vorgesehen, auf den die gesamten Leistungseinheiten primär speisen. Eine übergeordnete Steuerung 20 synchronisiert und versorgt die Leistungseinheiten mit den Sollwerten. Eine Flüssigkeitskühlung 21 ist ebenfalls vorgesehen.

Mittels des Schaltkreises 40 kann das Ausgangssignal für Anwendungen, z.B. zur induktiven Erwärmung bei der Ölgewinnung aus Ölsand eingesetzt werden. Der Umsetzter kann auf die dafür erforderliche Resonanzfrequenz getunt werden.

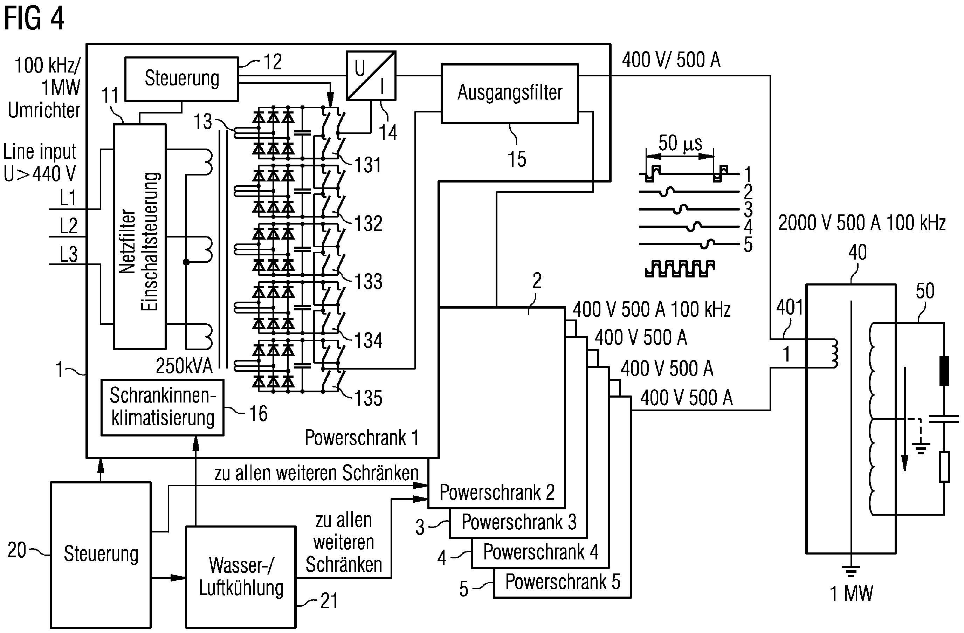

Eine weitere Ausgestaltung des Erfindungsgegenstandes ist in Fig. 4 gezeigt. Hier sind die Umrichtereinheiten 1, 2, 3, 4 und 5 in Reihe geschaltet. Auch hier kann festgelegt werden, wie viele der Umrichtereinheiten verwendet werden. Nicht benötigte Umrichtereinheiten können auf Durchzug geschaltet werden bzw. durchgeschaltet werden und nehmen somit keinen Einfluss auf das Ausgangssignal. Diese Lösung bietet insofern einen zusätzlichen Ausfallschutz, als bzgl. der meisten Störungen sich eine gestörte Umrichtereinheit dann wie eine auf Durchzug geschaltete Einheit verhält.

Somit kann eine Erzeugung von mittelfrequenten Strömen in dieser hohen Leistungsklasse aufwandsarm realisiert werden. Dazu werden lediglich kleinere Leistungseinheiten mit 200 kW und Maximalfrequenz von 20 kHz benötigt. Die Skalierbarkeit der maximalen Leistungsfrequenz wird durch mehr oder weniger Leistungseinheiten realisiert. Aus diesem Grunde ist das Gesamtsystem aufwandsärmer und kostengünstiger als herkömmliche Lösungen.

Die Erfindung ist im Rahmen eines Ausführungsbeispiels dargestellt, das illustrativ aber nicht beschränkend sein soll. Dem Fachmann sind unmittelbar weitere Abwandlungen ersichtlich, die auf demselben Prinzip beruhen und in den Schutzbereich einbezogen sein sollen. Beispielsweise können andere Ausgestaltungen von Umrichterelementen verwendet werden; es sind auch andere Realisierungen der Überlagerung der einzelnen Ausgangssignale als mittels eines Transformators problemlos möglich.

## Patentansprüche

1. Umrichter zur Bereitstellung eines in der Frequenz skalierbaren Umrichterausgangssignals, insbesondere mit einer hohen Ausgangsleistung,
- mit einer Mehrzahl von Umrichtereinheiten (1, 2, 3, 4, 5, n), welche jeweils Schaltelemente aufweisen und für die Generierung eines Signals ausgebildet sind,
- mit einer zentralen Steuerung (20) für die Frequenz des Umrichterausgangssignals nach Maßgabe eines vorgebbaren Wertes, wobei
- die zentrale Steuerung (20) dafür eingerichtet ist, für die Generierung eines Umrichterausgangssignals mit einem für das Umrichterausgangssignal vorgegebenen Frequenzwert einen Zeitversatz von durch Umrichtereinheiten (1, 2, 3, 4, 5, n) generierten Signalen und die Überlagerung der Signale zu dem Umrichterausgangssignal mit dem für das Umrichterausgangssignal vorgegebenen Frequenzwert zu veranlassen,
**gekennzeichnet dadurch, dass**
die Umrichtereinheiten jeweils eine die Schaltelemente steuernde Steuerung (12) aufweisen.

2. Umrichter nach Anspruch 1,
**dadurch gekennzeichnet, dass**
die zentrale Steuerung (20) dafür eingerichtet ist, die Generierung der überlagerten Signale mit einer einstellbaren Frequenz zu veranlassen.

3. Umrichter nach Anspruch 1 oder 2,
**dadurch gekennzeichnet, dass**
die Umrichtereinheiten (1, 2, 3, 4, 5, n) jeweils einen Transformator (13) umfassen.

4. Umrichter nach einem der vorhergehenden Ansprüche,
**dadurch gekennzeichnet, dass**
- der Umrichter für eine Überlagerung von Ausgangssignalen der Umrichtereinheiten (1, 2, 3, 4, 5, n) zu dem Umrichterausgangssignal ausgestaltet ist, und
- die zentrale Steuerung (20) dafür eingerichtet ist, durch einen Zeitversatz dieser Ausgangssignale die Überlagerung der Ausgangssignale zu dem Umrichterausgangssignal mit vorgegebenem Frequenzwert zu veranlassen.

5. Umrichter nach Anspruch 4,
**dadurch gekennzeichnet, dass**
der Umrichter einen Transformator (40) für die Überlagerung von Ausgangssignalen der Umrichtereinheiten (1, 2, 3, 4, 5, n) aufweist.

6. Umrichter nach einem der vorhergehenden Ansprüche 1 bis 3, **dadurch gekennzeichnet, dass**
- der Umrichter gemäß einer Kaskadierung der Umrichtereinheiten (1, 2, 3, 4, 5, n) aufgebaut ist, und
- die zentrale Steuerung (20) dafür eingerichtet ist, durch einen Zeitversatz und anschließendes Überlagern von Signalen innerhalb wenigstens einer der Umrichtereinheiten ein Ausgangssignal dieser Umrichtereinheit mit dem vorgegebenen Frequenzwert zu erzeugen.

7. Umrichter nach einem der vorhergehenden Ansprüche,
**dadurch gekennzeichnet, dass**
die zentrale Steuerung (20) dafür eingerichtet ist, durch Festlegung einer für ein Ausgangssignal des Umrichters verwendeten Anzahl von Umrichtereinheiten (1, 2, 3, 4, 5, n) eine Steuerung der Ausgangsfrequenz und/oder der Ausgangsleistung des Umrichters zu bewirken.

8. Umrichter nach Anspruch 7,
**dadurch gekennzeichnet, dass**
die zentrale Steuerung (20) für eine Festlegung der verwendeten Anzahl von Ausgangssignalen durch Hinzuschalten bzw. Abschalten von für die Generierung des Umrichterausgangssignals verwendete Umrichtereinheiten ausgestaltet ist.

9. Umrichter nach einem der vorhergehenden Ansprüche,
**dadurch gekennzeichnet, dass**
der Umrichter eine zentrale Kühlung (21) umfasst, mit Hilfe derer die einzelnen Umrichtereinheiten (1, 2, 3, 4, 5, n) gekühlt werden.

## Claims

1. Inverter for providing an inverter output signal that is scalable in frequency, in particular having a high output power,
- having a plurality of inverter units (1, 2, 3, 4, 5, n), which each have switching elements and are embodied for generating a signal,
- having a central controller (20) for the frequency of the inverter output signal in accordance with a definable value, wherein
- the central controller (20) has, for generating an inverter output signal having a frequency value specified for the inverter output signal, been set up to cause signals generated by inverter units (1, 2, 3, 4, 5, n) to have a time delay and the signals to be superimposed on the inverter output signal having the frequency value specified for the inverter output signal,
**characterised in that**
the inverter units each have a controller (12) which controls the switching elements.

2. Inverter according to claim 1,
**characterised in that**
the central controller (20) has been set up for causing the superimposed signals to be generated having a frequency that can be set.

3. Inverter according to claim 1 or 2,
**characterised in that**
the inverter units (1, 2, 3, 4, 5, n) each include a transformer (13).

4. Inverter according to one of the preceding claims,
**characterised in that**
- the inverter is embodied for superimposing output signals of the inverter units (1, 2, 3, 4, 5, n) on the inverter output signal, and
- the central controller (20) has been set up to cause said output signals, by being time-delayed, to be superimposed having a specified frequency value on the inverter output signal.

5. Inverter according to claim 4,
**characterised in that**
the inverter has a transformer (40) for superimposing output signals of the inverter units (1, 2, 3, 4, 5, n).

6. Inverter according to one of the preceding claims 1 to 3,
**characterised in that**
- the inverter is constructed in keeping with a cascading of the inverter units (1, 2, 3, 4, 5, n), and
- the central controller (20) has been set up to generate an output signal of at least one of the inverter units having the specified frequency value by means of a time delay followed by superimposing of signals within said inverter unit.

7. Inverter according to one of the preceding claims,
**characterised in that**
the central controller (20) has been set up to effect controlling of the output frequency and/or output power of the inverter by specifying a number of inverter units (1, 2, 3, 4, 5, n) used for an output signal of the inverter.

8. Inverter according to claim 7,
**characterised in that**
the central controller (20) is embodied for specifying the number of output signals used by adding or, as the case may be, disconnecting inverter units used for generating the inverter output signal units.

9. Inverter according to one of the preceding claims,
**characterised in that**
the inverter includes a central cooler (21) with the aid of which the individual inverter units (1, 2, 3, 4, 5, n) are cooled.

## Revendications

1. Convertisseur pour la fourniture d'un signal de sortie de convertisseur modulable en fréquence, en particulier avec une puissance de sortie élevée,
- avec une pluralité d'unités de convertisseur (1, 2, 3, 4, 5, n), lesquelles comprennent chacune des éléments de commutation et sont conçues pour la génération d'un signal,
- avec une commande centrale (20) pour la fréquence du signal de sortie de convertisseur en fonction d'une valeur pouvant être prédéfinie,
dans lequel
- la commande centrale (20) est configurée pour provoquer la génération d'un signal de sortie de convertisseur avec une valeur de fréquence prédéfinie pour le signal de sortie de convertisseur par un décalage temporel de signaux générés par des unités de convertisseur (1, 2, 3, 4, 5, n) et la superposition des signaux au signal de sortie de convertisseur avec la valeur de fréquence prédéfinie pour le signal de sortie de convertisseur,
**caractérisé en ce que**
les unités de convertisseur comprennent chacune une commande (12) commandant les éléments de commutation.

2. Convertisseur selon la revendication 1,
**caractérisé en ce que**
la commande centrale (20) est configurée pour provoquer la génération des signaux superposés avec une fréquence ajustable.

3. Convertisseur selon la revendication 1 ou la revendication 2,
**caractérisé en ce que**
les unités de convertisseur (1, 2, 3, 4, 5, n) comportent chacune un transformateur (13).

4. Convertisseur selon l'une des revendications précédentes,
**caractérisé en ce que**
- le convertisseur est conçu pour une superposition de signaux de sortie des unités de convertisseur (1, 2, 3, 4, 5, n) au signal de sortie de convertisseur, et
- la commande centrale (20) est configurée pour provoquer la superposition des signaux de sortie au signal de sortie de convertisseur avec une valeur de fréquence prédéfinie par un décalage temporel de ces signaux de sortie.

5. Convertisseur selon la revendication 4,
**caractérisé en ce que**
le convertisseur comprend un transformateur (40) pour la superposition de signaux de sortie des unités de convertisseur (1, 2, 3, 4, 5, n).

6. Convertisseur selon l'une des revendications précédentes 1 à 3,
**caractérisé en ce que**
- le convertisseur est constitué selon un montage en cascade des unités de convertisseur (1, 2, 3, 4, 5, n), et
- la commande centrale (20) est configurée pour produire, par un décalage temporel et la superposition subséquente de signaux à l'intérieur d'au moins l'une des unités de convertisseur, un signal de sortie de cette unité de convertisseur avec la valeur de fréquence prédéfinie.

7. Convertisseur selon l'une des revendications précédentes,
**caractérisé en ce que**
la commande centrale (20) est configurée pour effectuer, par fixation d'un nombre d'unités de convertisseur (1, 2, 3, 4, 5, n) utilisé pour un signal de sortie du convertisseur, une commande de la fréquence de sortie et/ou de la puissance de sortie du convertisseur.

8. Convertisseur selon la revendication 7,
**caractérisé en ce que**
la commande centrale (20) est conçue pour une fixation du nombre de signaux de sortie utilisé par branchement resp. débranchement d'unités de convertisseur utilisées pour la génération du signal de sortie de convertisseur.

9. Convertisseur selon l'une des revendications précédentes,
**caractérisé en ce que**
le convertisseur comporte un refroidissement central (21), à l'aide duquel les unités de convertisseur (1, 2, 3, 4, 5, n) individuelles sont refroidies.
